# EUROPEAN PATENT APPLICATION

(11) **EP 2 667 430 A1**
(43) Date of publication of application: **27.11.2013**
(21) Application number: 13169063.8
(22) Date of filing: 24.05.2013
(51) Int. Cl.: H01M 2/34, H01M 4/12, H01M 4/36, H01M 4/40, H01M 6/14, H01M 4/66

(54) **High temperature primary battery with improved safety**

(30) Priority: 25.05.2012 US 201261651578 P; 20.05.2013 US 201313897765
(71) Applicant: Electrochem Solutions, Inc., Clarence, NY 14031 (US)
(72) Inventor: Johnson, Arden Phillip, Arlington, MA Massachusetts 02474 (US); Miller, John S., Dedham, MA Massachusetts 02026 (US)
(74) Representative: Maiwald Patentanwalts GmbH

(57) **Abstract**

A lithium thionyl chloride cell having, in a can, a cathode collector, a solution of lithium tetra-chloroaluminate (LiAlCl₄) in thionyl chloride (SOCl₂), and a lithium alloy anode. The lithium alloy anode has lithium and an alloy material selected from the group consisting of magnesium and aluminum. The composition of lithium in relation to the alloy material ranges from 95:5 to 50:50, by weight, such that the total capacity of the lithium plus the alloying material is greater than the capacity of the thionyl chloride and at the same time the capacity of the lithium alone is less than or equal to the capacity of the thionyl chloride.

## Description

### Cross-Reference to Related Applications

This application claims priority to U.S. provisional patent application serial number 61/651,578; filed on May 25, 2012.

### Field of the Invention

The present invention is directed to lithium thionyl chloride cells, and in particular to spirally wound (a.k.a., jelly-rolled type construction) lithium thionyl chloride cells.

### Background of the Present Invention

NASA's Jet Propulsion Laboratory, in a publication entitled "Safety Considerations of Lithium Thionyl Chloride Cells" by Surampudi et al. -- published June 1, 1986 --, expressed:
- "In spite of many attractive features, the use of spirally wound lithium thionyl chloride (Li-SOCl₂) cells is currently limited because of their hazardous behavior." See abstract.
- "The lithium thionyl chloride (Li-SOCl₂) cell possesses higher energy density than any currently available primary cells. The cell also has many other desirable features: high operating voltage, excellent voltage stability over 95 percent of the discharge, operating capabilities over a wide temperature range (-40°C to +80°C), exceptionally long storage life, and low cost materials." See page 1-1.
- "Lithium thionyl chloride (Li-SOCl₂) cell consists [of] a lithium (Li) foil anode, a porous carbon (C) cathode, and neutral solution of lithium tetra-chloroaluminate (LiAlCl₄) in thionyl chloride (SOCl₂) as the electrolyte. The electrodes are physically separated by a glass fiber paper. In these cells Li is the anode active material and SOCl₂ serves as both a cathodic reactant (catholyte) and solvent for the electrolyte. The carbon electrode has various roles in this system. It acts as a catalyst for the reduction of SOCL₂; together with an expanded metal screen it functions as a current collector, and also serves as a container for the insoluble discharge products. The electrochemical reaction is not yet fully understood, but the overall reaction is believed to be:

   4Li + 2 SOCl₂→4 LiCl + S + SO₂ ....

Thermodynamically, Li and SOCl₂ together are unstable and should react vigorously. The observed stability of the Li anode is due to the presence of a LiCl protective film present on its surface which prevents further attack by SOCl₂. Hence any condition that can lead to the disruption of the protective film may make the cell potentially hazardous. It is also known that both Li and SOCl₂ are quite moisture sensitive. Any situation that brings these materials into contact with water vapor (via humidity or impurity) may also cause safety problems.

Cells have been fabricated in many configurations such a cylindrical, button, disc, and prismatic shapes depending on the application. Jellyroll-type construction ... is used in cylindrical cells required for low- to moderate-rate ... applications. Bobbin-type construction ... is preferred for cylindrical cells [required for] very low-rate applications. Both types of cells employ a neutral electrolyte (1.5M -1.8M LiAlCl₄ in SOCl₂). Some very high-rate reserve type cells have also been developed. They use acidic electrolytes (typically 1.9 M LiCl-2.2M AlCl₃ in SOCL₂), which result in high self-discharge rates and, therefore,... the electrolyte [is] isolated from the electrodes until [it is] use[d]." See page 2-1.
- "For the most part, all hazardous incidents involving Li-SOCl₂ cells reported ... may be classified into one of the following categories:
   1. Leaking of electrolyte through seals or welds under mild or non-operation conditions.
   2. High-pressure venting of internal gases and electrolyte though seal and weld areas.
   3. Violent or controlled rupture of a cell case with the expulsion of toxic materials, sometimes explosively with fire.

All of these incidents pose considerable safety problems. The safety problems basically are due to the extreme reactivity and toxic nature of cell components and discharge components.... In attempting to analyze the above hazards, one finds it difficult to separate the cause of a violent or controlled rupture from that of venting. Cell rupture may occur when a cell is being operated at a high rate and heat removal is inadequate. Internal pressure increases rapidly with increasing temperature due to both gas expansion and the increase in SOCl₂ vapor pressure." See page 4-1.
- "The various approaches that have been reported in the literature to minimize safety problems include:
   (1) Using multiple tabs on the electrodes to minimize uneven current distribution....
   (2) Using high-purity materials and ensure that Li is not contaminated with Li₃N....
   (3) Equipping high-rate cells with fuses (thermal, if possible) to limit the current to a safe value...." See page 5-9.

Similar language was expressed at pages 7-2 and 7-3 regarding cell design parameters that strongly encouraged multiple tabs for jelly-roll configurations.
- "Explosions at elevated temperatures are believed to be due to simple pressurization or thermal runaway.... [It was] reported that the pressure of a sealed fresh cell increased from 14 to 28 psi as the temperature was raised from 25°C to 70°C. By calculation, it has been shown that appreciable pressure can result in discharged cells that are at ambient to moderate temperatures (25°C to 80°C). In addition to the decreased solubility of SO₂ and the increase in vapor pressure of SOCl₂, very high pressures may result in discharged cells at temperatures between 80°C to 180°C. The reaction between sulfur and thionyl chloride may be responsible for pressure build-up at temperatures of 130°C and above [in] partially or fully discharged cells. At 180°C, the melting point of lithium, the total pressure within the cell is estimated to [be] greater than 200 psi." See page 5-10.
- "A number of suggestions have been reported in the literature aimed at making the cells relatively safe under short-circuit conditions. These various measures include:
   (1) Modifying the Li electrode by alloying it with elements such as ... magnesium,... aluminum, etc. to increase the melting point of the anode material....
   (5) Providing each cell with a current limiting fuse or similar device." See page 5-15.

Thus, it appears using Li-SOCl₂ cells, even with (a) a modified Li electrode alloyed with magnesium and (b) a current limiting fuse, at temperatures below 130°C has become standard in view of NASA's above-identified report.

That conclusion is confirmed in U.S. patent number 6,045,941; where Milewits discloses that lithium thionyl chloride cells have been used with downhole tools in oilfields at temperatures that range between [room temperature] and 130°C. See column 4, lines 21-22. Milewits acknowledges that lithium thionyl chloride cells, in comparison to other lithium batteries, can have severe voltage delays and, as a result, greater battery failure. See col. 4, lines 29 to 60. To address those problems, Milewits employed lithium thionyl chloride cells in a bobbin style configuration - a central cathode material surrounded, with separation there between, by an anode material -- with specially modified anode structures to give an indication of depth of discharge upon application of a defined load at [room] temperatures to 130°C. At column 5, lines 47 to 51; Milewits further wrote, "The anode members are preferably formed from an electrochemically active alkali metal ... lithium [and] their alloys ...." Milewits' anode modifications are such that each anode is "a two part anode structure ... so [a first part of the] anode has twice the surface area and four times the mass of the [second part of the] anode so that when the first [part of the] anode is depleted, 80% of the battery's capacity will have been spent." See col. 15, lines 56 to 61. This depletion anode system allows an operator to determine when the cell needs to be timely replaced by measuring the output voltage because when the one anode member is depleted prior to the other anode member the cell produces a step change in the output voltage from a higher, substantially constant output voltage, to a lower, substantially constant output voltage.

Milewits fails to identify what is the percentage of lithium to alloy material in its bobbin-style configuration. Milewits' reference to 50/50 and 75/25 refers to the portions of the first part of the anode in relation to the second part of the anode, not the percentages of the lithium to the alloy.

In relation to a lithium alloy anode (note not the present invention's Li-SOCl₂ cell); Smesko in U.S. patent number 5,569,553 discloses an unbalanced bobbin type, human implantable electrochemical cell "with one of the anode components consisting of a lithium-magnesium alloy providing 10% of the total anode weight and positioned on one side of the central CFₓ cathode, and the other anode component consisting of pure lithium providing 90% of the total anode weight and positioned on the opposite side of the cathode." See col. 13, lines 2 to 7. Smesko merely confirms that lithium-magnesium alloy, of unknown percentages of lithium and alloy, should be a mere 10% of the total anode weight since a second anode used in the electrochemical cell should be pure lithium.

In U.S. patent number 8,197,973; Issaev wrote, "The invention is directed to lithium primary cells (note not the present invention's Li-SOCl₂ cell) wherein the anode comprises lithium metal. The lithium may be alloyed with small amounts of an alloy metal, for example aluminum, forming a lithium alloy, which typically comprises less than about 1 wt. % of the alloy metal." See summary of the invention.

In 2007, Richardson et al. published an article entitled "Solid solution lithium alloy cermet anodes". In that 2007 article, Richardson et al. disclosed how to prepare a Li-Mg alloy having 30% magnesium. They wrote, "Lithium-magnesium alloys were prepared by melting lithium foil and magnesium powder or ribbon in a steel crucible in an argon atmosphere. Alloys with Mg content up to 30% were melted in an open crucible furnace in a controlled atmosphere glove box. Metal mixtures with higher Mg content were placed in a tantalum crucible and sealed in a copper-gasketed stainless steel container, then heated in a box furnace. The alloy ingots were cold-rolled into foils between spring steel sheets to prevent adhesion to the rollers.... Lithium-magnesium alloy electrodes maintain their physical integrity and appear to suppress the formation of dendrites during stripping and plating of lithium in a non-aqueous electrolyte.... High quality Li-Mg alloys are difficult to prepare and handle ... due to their reactivity and high melting temperatures."

Richardson et al. acknowledge that Li-Mg alloy anodes have been described in several patents - U.S. patent numbers 3,895,962 -- "magnesium ... is combined with the lithium anode to both reduce the tarnish rate of the lithium in air and to reduce the resistivity of the lithium iodide layer which is developed during the discharge operation of the battery" -- ; 5,102,475 -- "lithium/magnesium alloys having a thickness of 20 µm are produced by adding magnesium to three baths of molten lithium under argon so as to obtain three compositions containing 50%, 30% and 10% of magnesium atoms respectively.... pure lithium behaves even worse than Li-10 Mg under identical operating conditions [for accumulators]." --; 5,350,647 -- "electrodes for electrochemical devices such as capacitors and to anodes for lithium batteries, and the like, which electrode is an alloy or composite of lithium with at least one other material.... magnesium combined with lithium has been found to provide an anode which increases the cycling capacity of a battery by three to four times that of a battery with a pure lithium anode alone, and provides a very light weight alloy, since magnesium is the third lightest metal after lithium." --; and 5,705,293 --"new and improved thin-film lithium batteries which can be used in applications where the temperature is in the range of less than 180°C. to about 500°C."--. None of those cited references utilize its lithium alloy anodes in the claimed Li-SOCl₂ cell; instead those lithium alloy anodes are used in other types of lithium cells.

The above, immediately-identified references confirm that lithium-magnesium anodes having 5 to 30% magnesium were known prior to the filing of this application. However, those lithium-magnesium anodes having 5 to 30% magnesium were used in non-Li-SOCl₂ cells. The above-identified NASA report directed to jelly-roll Li-SOCl₂ cells acknowledges that such cells are extremely unstable. To address such instability, the NASA report recommends multiple anodes to minimize safety problems, each of the multiple anodes can be a lithium magnesium anode of unknown magnesium percentage, and the Li-SOCl₂ cell is not operable above 130°C.

The instant application has determined otherwise. Instead, the present application describes a Li-SOCl₂ cell that is operational at temperatures ranging from -40°C to above 165°C, or until just prior to when the anode melts. That is by having a single, one piece, and integral lithium alloy anode. A claimed combination of prior art elements is nonobvious where the prior art teaches away from the claimed combination and the combination yields more than predictable results. Crocs, Inc. v. U.S. Int'l Trade Comm'n, 598 F.3d 1294 (Fed. Cir. 2010).

### SUMMARY OF THE INVENTION

A lithium thionyl chloride cell having, in a can or housing, a cathode collector, a solution of lithium tetra-chloroaluminate (LiAlCl₄) in thionyl chloride (SOCl₂), and a lithium alloy anode. The lithium alloy anode has lithium and an alloy material selected from the group consisting of magnesium and aluminum. The composition of lithium in relation to the alloy material ranges from 95:5 to 50:50, by weight, such that the total capacity of the lithium plus the alloying material is greater than the capacity of the thionyl chloride and, at the same time, the capacity of the lithium alone is less than or equal to the capacity of the thionyl chloride.

### Brief Description of the Drawings

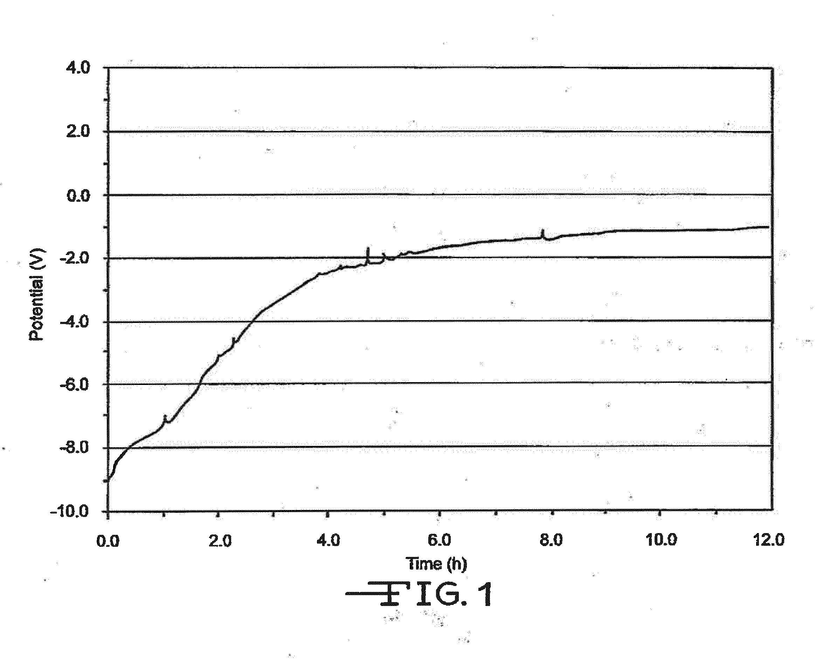

Figure 1 shows the behavior of a cell containing a lithium-magnesium alloy (75% Li / 25% Mg, by weight), with the initial capacities of the lithium-magnesium alloy anode and the thionyl chloride liquid cathode chosen so that the total capacity of the alloy anode was greater than the capacity of the thionyl chloride, and the capacity of the lithium alone was approximately equal to the capacity of the thionyl chloride. The cell was discharged to end of life, and a 25 mA current was then forced through the cell to drive it into voltage reversal for twelve hours. In spite of this abusive condition, no venting or cell rupture was observed.

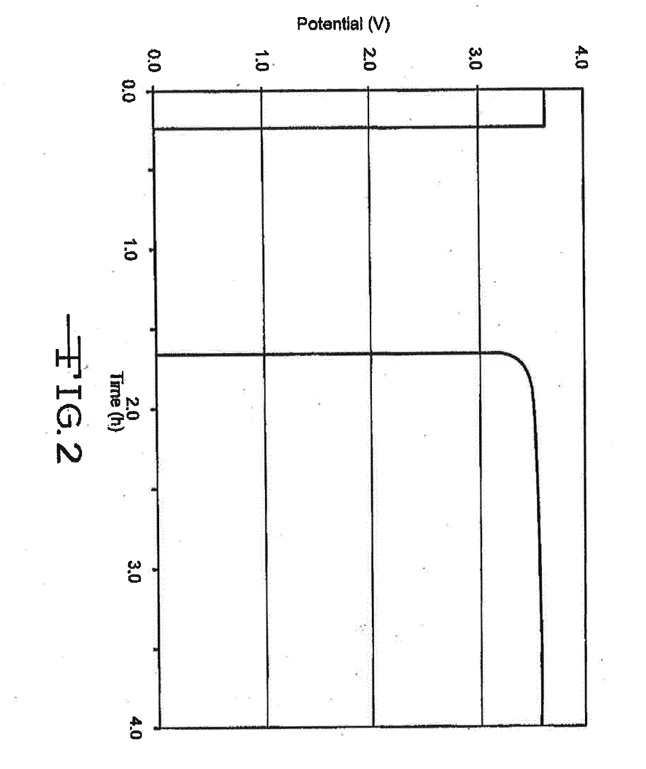

Figure 2 shows the behavior of a similar cell that was discharged to end of life under a short circuit condition, wherein a resistance of less than 100 milliohms was applied. The cell did not generate enough current to blow the protective fuse, however no venting or cell rupture or any other hazardous behavior was observed, even though the fuse did not activate to disable the cell.

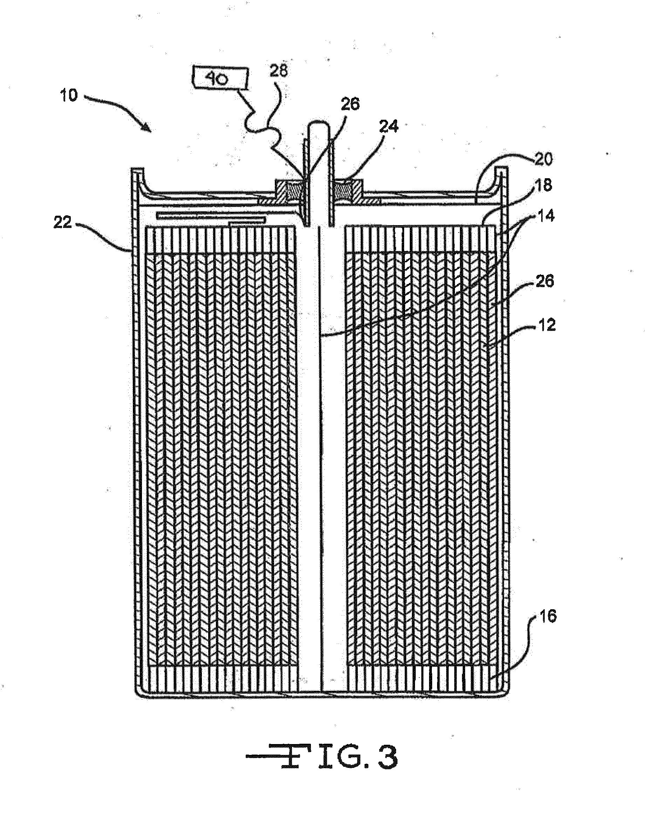

Figure 3 illustrates a cross-section of a lithium thionyl chloride (Li-SOCl₂) cell in a jelly-roll configuration.

### Detailed Description of the Present Invention

The present invention is a lithium thionyl chloride (Li-SOCl₂) cell 10, preferably in a jelly-roll configuration, that has, contained in a can or housing 22, a cathode collector 12, a solution of lithium tetra-chloroaluminate (LiAlCl₄) in thionyl chloride (SOCl₂), and a lithium alloy anode 26. In a preferred embodiment, is a one part lithium anode and more preferable embodiment, the anode is comprised of a single, one part, integral lithium alloy anode. The cell 10 can also have a separator 14, a bottom insulator 16, a center insulator 18, a cap insulator 20, a glass/metal seal 24, or combinations thereof. The cell 10 may also have a fuse 28 positioned and interconnected between the cell 10 and a potential short-circuit or over-discharge causing structure 40, for example and not limited to a load, as illustrated at Figure 3. Admittedly, the general concept of a lithium thionyl chloride (Li-SOCl₂) cell having, in the can or housing, the cathode collector, the solution of lithium tetra-chloroaluminate (LiAlCl₄) in thionyl chloride (SOCl₂), fuses, and many anodes of which one may be a lithium alloy anode, was known and generically disclosed in the NASA report when NASA expressed,

"Lithium thionyl chloride (Li-SOCl₂) cell consists [of] a lithium (Li) foil anode, a porous carbon (C) cathode, and neutral solution of lithium tetra-chloroaluminate (LiAlCl₄) in thionyl chloride (SOCl₂) as the electrolyte.... [m]odifying the Li electrode by alloying it with elements such as boron, calcium, magnesium, silicon, aluminum, etc. to increase the melting point of the anode material [and p]roviding each cell with a current limiting fuse or similar device" in a Li-SOCl₂ cell to make "the cells relatively safe under short-circuit conditions", and in particular for a jelly-rolled Li-SOCl₂ cell configuration.

Despite those generic teachings, merely modifying the lithium anode into a lithium alloy anode did little to increase the Li-SOCl₂ cell's safe operating condition over 130°C as confirmed by Milewits in previously discussed U.S. patent number 6,045,941.

Excluding the lithium alloy anode, the other components and structures of the jelly-rolled Li-SOCl₂ cell configuration illustrated in Figure 3 are in the public domain and well known to those of ordinary skill in the art. Accordingly, applicant will not discuss the cathode collector 12, the separator 14, the neutral solution of lithium tetra-chloroaluminate (LiAlCl₄) in thionyl chloride (SOCl₂) as the electrolyte, the bottom insulator 16, the center insulator 18, the cap insulator 20, the can or housing 22, and the glass/metal seal 24 in this application. Those structures and components are not the patentable aspect of this application.

The present invention is directed to a specific anode embodiment that allows a Li-SOCl₂ cell to effectively operate from -40°C to over 165°C; and most preferably over 185°C, which is just prior to the anode's melting point, as illustrated in Figures 1 and 2. Figure 1 shows the behavior of a cell containing a lithium-magnesium alloy (75% Li / 25% Mg, by weight), with the initial capacities of the lithium-magnesium alloy anode and the thionyl chloride liquid cathode chosen so that the total capacity of the alloy anode was greater than the capacity of the thionyl chloride, and the capacity of the lithium alone, by weight percentage, was approximately equal to the capacity of the thionyl chloride. The cell was discharged to end of life, and a 25 mA current was then forced through the cell to drive it into voltage reversal for twelve hours. In spite of this abusive condition, no venting or cell rupture was observed.

Figure 2 shows the behavior of a different but the same cell configuration as Figure 1 that was discharged to end of life, and a short circuit with a resistance of less than 100 milliohms was applied. The cell did not generate enough current to blow the protective fuse, but no venting or cell rupture or any other hazardous behavior was observed even though the fuse did not activate to disable the cell.

To achieve that objective, it is imperative that the user of the Li-SOCl₂ cell understand the Li-SOCl₂ cell. Thionyl chloride and sulfuryl chloride batteries that use pure lithium metal as the anode cannot be used above the melting point of the lithium metal, 180°C, and in fact batteries using pure lithium metal are more typically rated for use only at temperatures below about 165°C, where this decreased temperature rating provides a safety margin so that the cells can operate without risk, even in the case of internal heating during discharge that can raise the temperature inside the cell higher than the external ambient temperature.

In many underground applications the ambient temperature can exceed 165°C. To enable the safe operation ofthionyl chloride and sulfuryl chloride batteries at those higher temperatures, it is necessary to use an anode material with a higher melting point.

Alloys of lithium with magnesium or aluminum have been used in lithium cells that can operate safely at temperatures up to about 200°C. See U.S. patent numbers 3,895,962; 5,102,475; 5,350,647; and 5,705,293. That being said, such anodes have not been effectively used in association with Li-SOCl₂ cells to raise safety standards by having the initial capacities of the lithium-magnesium alloy anode and the thionyl chloride liquid cathode chosen so that the total capacity of the alloy anode is greater than the capacity of the thionyl chloride, and the capacity of the lithium alone is approximately equal to the capacity of the thionyl chloride; and in addition operate safely at operating temperatures over 135°C, but less than when the anode would begin to melt. Instead of the conventional anode of (a) lithium with a trace of magnesium, (b) a two tiered anode system or (c) lithium alone in a lithium-alloyed anode having greater capacity than the thionyl chloride, the current invention utilizes a lithium alloy anode in association with Li-SOCl₂ cells to raise safety standards by having the initial capacities of the lithium-magnesium alloy anode and the thionyl chloride liquid cathode chosen so that the total capacity of the alloy anode is greater than the capacity of the thionyl chloride, and the capacity of the lithium alone is less than - (less than ranges from 50% to 99.99%, or more preferably 75% to 99.99%) -- or equal to the capacity of the thionyl chloride. Additionally the present cell must operate safely at temperatures over 135°C, but less than when the anode begins to melt. The cell operates safely because when the lithium has been consumed, there is still magnesium left to provide a safety advantage in the case of overdischarge. In the case of alloys of lithium with magnesium, the ratio of lithium and magnesium by weight is in the range from 95%/5% to 75%/25% and it is a one-part, integral anode.

A Li-SOCl₂ cell that contains a higher-melting lithium alloy anode, wherein the total capacity of the alloy anode is greater than the capacity of the thionyl chloride, and the capacity of the lithium alone is less than or equal to the capacity of the thionyl chloride, in which the electrodes are arranged in a spiral-wound configuration provides a high rate capability and is capable of operating at temperatures higher than 165°C up to just below the anode's melting point.

However, a high-rate spiral wound design is normally disadvantageous. Higher rate capability typically leads to greater risk in the case of overdischarge as well as in the case of an external short-circuit. The risk of overdischarge is particularly high in situations where several cells are connected together in a multi-cell series. If one cell fails before the others in the series, then the failed cell is at risk of being driven to 0V or below. If this happens then potentially hazardous exothermic reactions can occur within the failed cell, and these reactions can lead to localized heating inside the cell.

The instant invention solves the above-identified problems as follows: The high rate cell with high temperature capability is a thionyl chloride cell that uses a lithium alloy anode (LiM), where M = Mg or Al, and the composition of the alloy can range from Li:M = 95:5 to Li:M = 50:50 by weight. The electrodes are wound in a spiral arrangement. To achieve improved safety performance, the active materials are present in proportions such that the total capacity of the lithium plus the alloying metal is greater than the capacity of the thionyl chloride, but at the same time the capacity of the lithium alone is less than or equal to the capacity of the SOCl₂. This range of anode materials in the lithium-alloy anode in the overall cell balance ensures that there is minimal lithium left at the end of discharge life, but that the alloying metal remains undischarged and will therefore provide protection in the case of overdischarge or short-circuit at the end of life. Likewise, having the fuse 28 positioned and interconnected between the cell 10 and a potential short-circuit or over-discharge causing structure, for example and not limited to a load, is desirable as well.

For improved safety in a lithium alloy/thionyl chloride cell configuration it is advantageous for the anode and cathode materials to be balanced in such a way as to ensure that essentially all of the lithium is consumed at the end of the cell's life, but that a significant portion of the alloying metal remains undischarged at end of life. The presence of this undischarged alloy metal is advantageous for three reasons:
1) the alloy metal is themally conductive and can therefore help conduct heat away from any local hotspot that might arise as the result of reactions that occur during overdischarge,
2) the alloy metal is electrically conductive and can therefore help to conduct electrical current evenly through the anode structure, further minimizing the risk of highly localized chemical reactions occurring under overdischarge or short-circuit conditions, and
3) the melting point of the alloying metal is much higher than the melting point of the lithium, so if heating does occur the alloying metal can withstand much higher temperatures without melting and potentially becoming dangerous itself.

The melting point of Mg is 648°C, and the melting point of Al is 660°C. Both of these metals have melting points that are substantially higher than the melting point of lithium metal, 180°C.

The most advantageous cell balance from the standpoint of safety is therefore to have the active materials present in proportions such that the total capacity of the lithium plus the alloying metal is greater than the capacity of the liquid cathode (SOCl₂), but at the same time the capacity of the lithium alone is less than or equal to the capacity of the SOCl₂. This range of cell balance ensures that there is minimal lithium left at the end of life, but that the alloying metal remains undischarged and will therefore provide the safety benefits described above.

In the case of an external short-circuit, a very high level of safety protection can be achieved through the use of the fuse 28. The fuse is rated to interrupt current flow and disable the cell if an unsafe amount of current is passed through the cell 10 and the fuse 28. However, near the end of life of the cell 10 there is much less active material remaining in the cell than there was at the beginning of life. In that case it is possible that the amount of current that the cell is capable of generating in the case of an external short circuit will not be sufficient to blow the fuse 28. However, it is possible that near end of life cell, the current may nevertheless be high enough to lead to dangerous heating within the cell. Thus, it is possible for a high rate cell to show hazardous behavior in the case of a short-circuit near the end of life even though that cell is otherwise protected through the use of the fuse 28. This situation is undesirable and one reason for the call of the present invention.

It is, therefore, apparent that a lithium thionyl chloride cell 10 having a single, one piece, integral lithium alloy anode obtains results, contrary to the teachings disclosed in the above-identified references, that allow the cell to operate between -40°C to temperatures over 165°C until just below the anode's melting point. While this invention has been described in conjunction with preferred embodiments thereof, it is evident that many alternatives, modifications, and variations will be apparent to those skilled in the art. Accordingly, the present invention is intended to embrace all such alternatives, modifications and variations that fall within the broad scope of the appended claims.

## Claims

1. A lithium thionyl chloride cell comprising:
in a can, a cathode collector, a solution of lithium tetra-chloroaluminate (LiAlCl₄) in thionyl chloride (SOCl₂), and a lithium alloy anode;
the single, one piece, integral lithium alloy anode made of lithium and an alloy material selected from the group consisting of magnesium and aluminum, wherein the weight ratio of lithium to the alloy material ranges from 95:5 to 50:50 such that
(a) the total capacity of the lithium plus the alloying material is greater than the capacity of the thionyl chloride and
(b) the capacity of the lithium alone is less than or equal to the capacity of the thionyl chloride.

2. The lithium thionyl chloride cell of claim 1 safely operates at temperatures ranging from -40°C to just below the melting point of the lithium alloy anode.

3. The lithium thionyl chloride cell of claim 3 safely operates above 165°C to just below the melting point of the lithium alloy anode.

4. The lithium thionyl chloride cell of claim 1 wherein the cathode collector, the solution of lithium tetra-chloroaluminate (LiAlCl₄) in thionyl chloride (SOCl₂), and the single, one piece, integral lithium alloy anode are in a jelly-roll configuration.

5. The lithium thionyl chloride cell of claim 1 further comprising a component selected from the group consisting of a separator, a thionyl chloride electrolyte, a bottom insulator, a center insulator, a cap insulator, a glass/metal seal, and combinations thereof.

6. The lithium thionyl chloride cell of claim 1 further comprising a fuse.

7. The lithium thionyl chloride cell of claim 6 safely operates at temperatures ranging from -40°C to just below the melting point of the lithium alloy anode.

8. The lithium thionyl chloride cell of claim 6 safely operates above 165°C to just below the melting point of the lithium alloy anode.

9. The lithium thionyl chloride cell of claim 6 further comprising a component selected from the group consisting of a separator, a thionyl chloride electrolyte, a bottom insulator, a center insulator, a cap insulator, a glass/metal seal, and combinations thereof.

10. The lithium thionyl chloride cell of claim 6 wherein the cathode collector, the solution of lithium tetra-chloroaluminate (LiAlCl₄) in thionyl chloride (SOCl₂), and the lithium alloy anode are in a jelly-roll configuration.

11. The lithium thionyl chloride cell of claim 1 wherein the lithium alloy anode is a single, one piece, integral lithium alloy anode.
